# EUROPEAN PATENT SPECIFICATION

(11) **EP 2 398 654 B1**
(45) Date of publication and mention of the grant of the patent: **31.12.2014**
(21) Application number: 10711025.6
(22) Date of filing: 22.02.2010
(51) Int. Cl.: B42D 15/00, G06K 19/077, B32B 37/14, B32B 38/04

(54) **METHOD FOR MANUFACTURING A FUNCTIONAL LAMINATE**
VERFAHREN ZUM HERSTELLEN EINES FUNKTIONSSCHICHTSTOFFVERBUND
PROCÉDÉ DE FABRICATION D'UN LAMINÉ FONCTIONNEL

(30) Priority: 23.02.2009 CH 268092009
(43) Date of publication of application: 28.12.2011
(73) Proprietor: HID Global GmbH, 65396 Walluf (DE)
(72) Inventor: MICHALK, Manfred, 99092 Erfurt (DE)
(74) Representative: Grosfillier, Philippe
(86) International application number: PCT/EP2010/052187
(87) International publication number: WO 2010/094790

(56) References cited:
- DE-A1- 10 316 091
- US-A1- 2007 278 315

## Description

### Field of the invention

The invention refers to a method for manufacturing a functional laminate.

### Background of the invention

Functional laminates are documents resulting from the lamination of a plurality of layers. In particular they are used as security documents such as smart cards, ID cards, credit cards and the like.

The notion of functional laminates also refers to semi-finished products like pre-laminates or inlays, which are used for example for the manufacturing of smart cards equipped with functional components such as chips or chip modules, RFID antennas, switches and the like. They usually comprise a number of layers, in which the chip module is embedded in at least one of the layers. The layers are usually made of a plastic material such as polycarbonate or polyethylene terephthalate.

When the layers are laminated using heat and/or pressure, the macromolecules of the plastic material tend to shorten thus causing the plastic material to shrink. Since the chip module itself does not shrink, the material is subjected to mechanical stress eventually leading to deforming, cracking or delaminating the material or at least residual stress which can result in damage to the functional components and their contacting with conductors, wires or antenna loops or even in destruction of the plastic material around the functional components.

These damages or destructions occur especially following a cooling stress, a mechanical stress (bending, torsion) and are also due to exposure to chemicals such as detergents or fuel. The damages in the plastic material are visible as cracks and warping for example. Besides the optical drawbacks, the service life of a smart card produced with such a functional laminate is reduced.

In addition, it appears that functional laminates with embedded functional components tend to show residual stress for the reasons indicated above.

### State of the art

US 2007/278315 A discloses a flat transponder and a method for the production thereof. The flat transponder has an electronic circuit embedded in a layer or in a layer composite, the circuit connected to conductor tracks or conductor wires. The circuit is arranged in or on a circuit carrier made of plastic with a respective paper layer laminated to either one of the circuit carriers two opposite outer surfaces. In order to increase the flexibility of the finished product, a plurality of notches are applied on/through at least the paper layer. These notches are incisions having only for aim to get the intrinsically stiff laminate more flexible so that the laminate bends over at the notched points under bending loading, even with relatively low forces. They are of no effect in case of a further lamination is carried out and according to this prior art, the notches are supposed to remain open. Hence, these notches are mainly carried out on the external layers (upper and/or lower layer).

US 4,639,585 discloses a data carrier with an integrated circuit (IC) module and a method for producing such a data carrier. For preventing the IC module from being affected by bending of the data carrier, the data carrier is divided into two areas. The IC is embedded into the first area which is relatively small compared to the second area and which is connected to the second area via a predetermined breaking point. When the data carrier is bent the resulting stress is kept away from the IC or at least levelled off. In particular, the data carrier is manufactured by wearing out one or more recesses from the core layer of the data carrier in order to form the predetermined breaking points. In the laminating procedure the recesses in the core layer may marginally be filled with softened material, which is taken into account when dimensioning the recesses to make sure the recesses are preserved after lamination.

Document DE 103 16 091 A1 further discloses a card body for a data carrier with functional elements embedded in it, wherein cutouts are present in the layer embedding the functional elements in order to create bending zones that protect said functional elements from bending stresses in the card body. There is no mention of a reduction of the width of said cutouts after lamination of said layer with cover layers.

### Summary of the invention

Accordingly, it is an aim of the present invention to improve the known methods used in the field.

This object is achieved by a method according to claim 1

Preferred embodiments of the invention are defined in the dependent claims.

Accordingly, in a functional laminate manufactured by the method according to the invention, mechanical tensions due to heat induced shrinking of the substrate sheet or the at least one additional layer (at least in an xy-level of the functional laminate) are reduced or removed by the recesses that are substantially closed or whose width is considerably reduced after lamination. Hence, the functional component and its contact areas, if applicable, are not subjected to these tensions, neither during the lamination procedure nor after. A risk of failure of the functional components due to cracks or warping is thus tremendously reduced. The recesses are formed at the latest before a final lamination step of the functional laminate. The characteristic of the final functional laminate is not significantly affected by the recesses since they are at least almost shut after the lamination step.

Safety documents and other plastic cards incorporating such a functional laminate may thus exhibit an increased service life and an improved optical quality by reduced surface unevenness. The processes for producing such cards do not have to be changed significantly since only one further step, the forming of the recesses is required.

The recess(es) may have any appropriate shape, preferably a hole, in particular a blind hole, or a trench, a "V" shape or any other shape. The recess(es) also can be formed on one side of the inlay or both.

In order to make sure that the recess(es) is (are) partially or closed to an extent preventing tensions, the magnitude of shrinking of the functional laminate in the lamination step may be estimated taking into account lamination step parameters, material properties, e.g. shrinking properties of the inlay, of the at least one additional layer and/or of the functional component. In this way the dimensions, number and layout of the at least one recess may be determined and correlated with the shrinking magnitude.

The lamination step parameters to be taken into account for estimating the magnitude of shrinking may comprise the lamination temperature, the lamination pressure, the duration of the entire lamination cycle, ...

In an advantageous embodiment of the invention the recess(es) may be formed by a laser or by a jet of water or by other equivalent techniques (for example as taught by US 2007/0278315 cited above).

In addition to the reduction in width by surrounding material, the recess(es) may be partially filled prior to the lamination step with an additional material different than the material surrounding the recess(es). The additional material may be advantageously a soft and temperature resistant material such as PU (polyurethane).

In another embodiment, the recess(es) may be arranged in a pattern to form at least one watermark (security sign).In this embodiment, the additional material may comprise a magnetic ink or another equivalent material. The magnetic ink, for example, gets hidden in the shrunk recesses and rendered invisible by the adjacent laminated layers. In this way the watermark is not apparent by visual inspection but can be detected with appropriate magnetically sensitive equipment.

Thus a tampering of such functional laminate or of a security document comprising a functional laminate manufactured by the method according to the present invention is made difficult. Indeed, when a smart card with a security sign is tampered with, e.g. by delaminating, replacing the chip module and re-laminating, at least some of the layers will inevitably be modified and/or destroyed and the pattern made by the ink altered. Replacing a module or a chip will result in a modified watermark which will reveal the tampering.

Of course, it is possible to envisage other ways of using the magnetic ink (or the other equivalent material used): for example one may create specific shapes that can be detected by appropriate devices, or other ways.

The inlay may preferably comprise a plastic material, in particular a thermoplastic material which may be easily recast when subjected to heat and/or pressure.

In particular, the plastic material may be one of polycarbonate (PC), polyethylene terephthalate (PET/PETG), polyurethane (PU), polyvinylchloride (PVC) and acrylonitrile butadiene styrene (ABS).

The functional component embedded into the inlay may be a chip or a chip module, a switch or another mechanical or electric/electronic component.

Further components such as an antenna coil may be embedded in the functional laminate. The antenna coil may be connected to the chip (or chip module) in order to form a transponder.

The functional laminate may be utilized as an inlay or a prelaminate for manufacturing a security document. It can also be used as inlay for the method of the invention i.e. a inlay in which "shrinking compensation" recesses are going to be formed before a next lamination step.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### Detailed description of the invention

The present invention will become more fully understood from the detailed description given herein below and the accompanying drawings which are given by way of illustration only, and thus, are not limitative of the present invention, and wherein:
- Figure 1: is a sectional view of a inlay with an embedded functional component,
- Figure 2: is a sectional view of a inlay with a plurality of recesses around the functional component
- Figure 3: is a top view of the inlay of figure 2
- Figure 4: is a sectional view of recesses containing an additional material,
- Figure 5: is a sectional view of a functional laminate manufactured by the method according to the invention

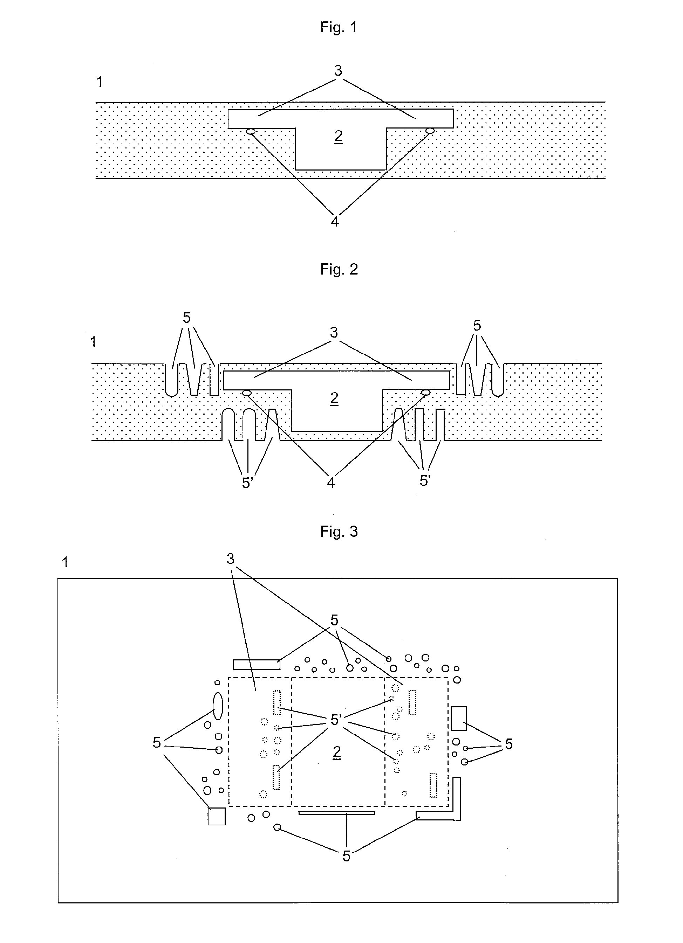

Figure 1 shows a sectional view of an inlay 1 with a functional component 2, e.g. a RFID chip module with module pads 3 for connection with wires 4 forming an antenna loop. The inlay 1 formed of at least two layers which have been laminated together with a functional element 2, such that the functional element 2 is at least partially embedded in the inlay 1 thus formed. In the embodiment illustrated in Fig. 1, the functional element 2 is fully embedded into the material of the inlay 1, but other configurations can be imagined, where for example a part of the functional element 2 would extend at or outside at least one of the surfaces of the inlay 1 such that the element 2 is only partially embedded in the inlay 1.

The inlay 1 may preferably be made of a plastic material, in particular a thermoplastic material, particularly one of polycarbonate (PC), polyethylene terephthalate (PET/PETG), polyurethane (PU), polyvinylchloride (PVC) and acrylonitrile butadiene styrene (ABS).

The functional component 2 is not limited to a chip module but can also be a switch or another mechanical or electric/electronic component or a security element for example, that is suitable to be at least partially embedded in an inlay 1. It is basically an element different of the layers forming the inlay 1 and which is adding a defined functionality to the inlay 1. Generally, such elements are made of and/or are packaged in a material which is much more robust than the inlay material. A typical example is a chip module or a chip.

The inlay 1 results of a lamination process, in which the functional component 2 has been at least partially embedded in co-laminated layers. As already described above, when the layers are laminated using heat and/or pressure the macromolecules of the plastic material tend to shorten thus causing the plastic material to shrink. Since the chip module itself does not shrink, the material forming the inlay is subjected to a mechanical stress eventually leading to deforming, cracking or delaminating of the material or at least residual stress which can result in damage to the functional components and their contacting with conductors, wires or antenna loops or in destruction of the plastic material around the functional components.

In this extend, the inlay 1 correspond exactly to the definition of the functional **laminate** manufactured by the method of the invention. So the invention also applies to the manufacture of an inlay, which can be used as basic element for the method of manufacture of another functional laminate according the invention. A feature according to the invention is that recesses for shrinking compensation should be formed around the functional element between each lamination step.

There are however material/commercial limitations to such a chain of manufacturing steps. Multiplying the lamination steps over 2 is not really efficient, and the thickness of the final product (functional element delivered to the customer) should not exceed certain limits.

As is shown in figures 2 and 3, before the inlay 1 is co-laminated with additional layers (not shown), recesses 5 are formed in the inlay 1 in an area adjacent to the functional component 2. The individual recesses 5 have a small width in proportion to the dimensions of the functional component 2.

The recesses 5 may be formed in any appropriate shape, preferably in the shape of a hole, in particular a blind hole or in the shape of a trench, or a "V" shape or any other suitable shape.

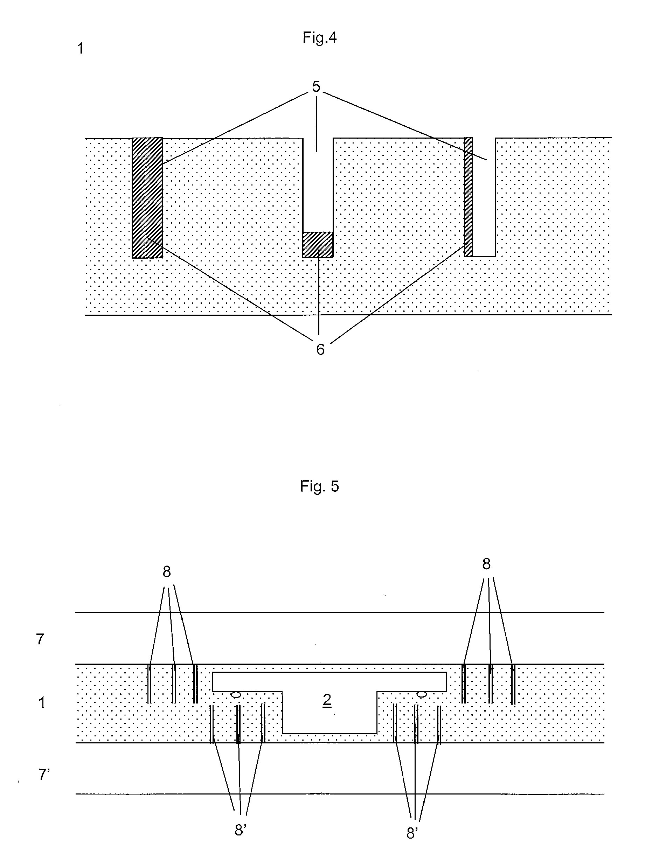

Preferably the magnitude of shrinking of the functional laminate in the lamination step is estimated taking into account lamination step parameters, material properties, e.g. shrinking properties of the inlay 1, of the additional layers 7 and 7' (see figure 5) and/or of the at least one functional component 2. In this way the dimensions, number and layout of the at least one recess may be determined previously and optimized and/or correlated with the shrinking magnitude.

For example, the lamination step parameters to be taken into account for estimating the magnitude of shrinking may comprise lamination temperature and/or lamination pressure.

The recesses 5 may be formed by a laser or by a jet of water or by any other equivalent means suitable for this task.

Additionally, as shown in Fig. 4, the recesses 5 may be partially filled with an additional material different than the material surrounding the recesses 5 prior to the lamination step. The additional material may be a soft and temperature resistant material such as PU (polyurethane).

The recesses 5 may be arranged in a pattern to form at least one security sign or element. In this case, the additional material may comprise a magnetic ink or another equivalent means. In case of magnetic ink, it gets hidden in the shrunk recesses 5 and rendered invisible by the adjacent laminated layers after the lamination step. It may then be detected later with appropriate equipment to check whether the inlay is genuine or has been tampered.

As shown in Fig.5, the inlay 1 with recesses 5 is co-laminated with two further layers 7 and 7' by heat and/or pressure which causes a considerable reduction in width of the recesses 5 up to the point where the recesses 5 are substantially closed at least by the surrounding material, so tensions caused by shrinking are almost entirely compensated by the recesses and not transmitted to the functional component 2 and particularly not to the connections between the module pads 3 and the wires 4.

Preferably, according to the present invention, at least one lamination step has to be carried out after forming the recesses 5 to realize the effect according to the invention.

As indicated above, the functional laminate may be used as an inlay or a prelaminate for manufacturing a security document containing it.

If the recesses 5 are used as a security element in combination with ink (as mentioned above), they can form a specific shape for example that can be later detected and/or read if magnetic ink is present in the recesses 5, as has been described above. Any tampering will then be more complicated to realize since a specific pattern has to be realized to copy the desired pattern, or the delamination necessary to free the functional component 2 will modify the characteristics of the ink that this will have to be compensated.

### LIST OF REFERENCES

- 1: inlay
- 2: functional component / RFID chip module
- 3: module pad
- 4: wire
- 5: recess
- 6: additional material
- 7: additional layer
- 8: reduced or substantially closed recess 5

## Claims

1. Method for manufacturing a functional laminate, the method comprising the following steps:
- providing an inlay (1) formed of at least two layers which have been laminated together with a functional element (2), such that the functional element (2) is at least partially embedded in the inlay (1);
- forming at least one recess (5) in the inlay (1) in an area adjacent to the functional element (2);
- laminating the inlay (1) with at least one additional layer in such a manner that the width of the at least one recess (5) is considerably reduced or the at least one recess (5) is substantially closed at least by surrounding material after lamination by virtue of shrinking of the laminated inlay (1).

2. Method according to the preceding claim, **characterized in that** said at least one recess (5) has a small width in proportion to dimensions of the functional element (2)

3. Method according to one of the preceding claims, **characterized in that** said at least one recess (5) is a trench or a hole, in particular a blind hole.

4. Method according to one of the preceding claims, **characterized in that** the dimensions, number and layout of said recess (5) are correlated with the magnitude of shrinking of the functional laminate in the lamination step.

5. Method according to one of the preceding claims, **characterized in that** said at least one recess (5) is formed by a laser or by a jet of water.

6. Method according to one of the preceding claims, **characterized in that** the recesses (5) are arranged in a pattern forming at least one watermark.

7. Method according to one of the preceding claims, **characterized in that** the recess (5) is at least partially filled with an additional material different than the material surrounding the recess (5) prior to the lamination step.

8. Method according to claim 7, **characterized in that** the additional material comprises a magnetic ink.

9. Method according to one of the preceding claims, **characterized in that** the inlay (1) comprises a plastic material, in particular a thermoplastic material.

10. Method according to claim 9, **characterized in that** the plastic material is one of polycarbonate, polyethylene terephthalate, polyurethane, polyvinylchloride and acrylonitrile butadiene styrene.

11. Method according to one of claims 1 to 10, **characterized in that** the functional element (2) is a chip or a chip module.

## Patentansprüche

1. Verfahren zur Herstellung eines Funktionsschichtstoffverbundes, wobei das Verfahren die folgenden Schritte umfasst:
- Bereitstellen einer Einlage (1), die aus mindestens zwei Schichten gebildet ist, die derart mit einem Funktionselement (2) zusammenlaminiert wurden, dass das Funktionselement (2) zumindest teilweise in der Einlage (1) eingebettet ist;
- Bilden mindestens einer Vertiefung (5) in der Einlage (1) in einem Bereich, der an das Funktionselement (2) angrenzt;
- Laminieren der Einlage (1) mit mindestens einer zusätzlichen Schicht derart, dass die Breite der mindestens einen Vertiefung (5) beträchtlich verringert oder die mindestens eine Vertiefung (5) nach dem Laminieren infolge von Schrumpfen der Laminateinlage (1) im Wesentlichen mindestens durch Umgebungsmaterial verschlossen wird.

2. Verfahren nach dem vorhergehenden Anspruch, **dadurch gekennzeichnet, dass** die mindestens eine Vertiefung (5) im Verhältnis zu den Abmessungen des Funktionselements (2) eine geringe Breite aufweist.

3. Verfahren nach einem der vorhergehenden Ansprüche, **dadurch gekennzeichnet, dass** die mindestens eine Vertiefung (5) eine Rille oder eine Öffnung, insbesondere eine Blindöffnung, ist.

4. Verfahren nach einem der vorhergehenden Ansprüche, **dadurch gekennzeichnet, dass** die Abmessungen, die Anzahl und die Gestaltung der Vertiefung (5) dem Grad des Schrumpfens des Funktionsschichtstoffverbundes beim Laminierschritt entsprechen.

5. Verfahren nach einem der vorhergehenden Ansprüche, **dadurch gekennzeichnet, dass** die mindestens eine Vertiefung (5) durch einen Laser oder einen Wasserstrahl gebildet wird.

6. Verfahren nach einem der vorhergehenden Ansprüche, **dadurch gekennzeichnet, dass** die Vertiefungen (5) in einem Muster angeordnet werden, das mindestens ein Wasserzeichen bildet.

7. Verfahren nach einem der vorhergehenden Ansprüche, **dadurch gekennzeichnet, dass** die Vertiefung (5) vor dem Laminierschritt mindestens teilweise mit einem zusätzlichen Material gefüllt wird, das sich von dem Material unterscheidet, das die Vertiefung (5) umgibt.

8. Verfahren nach Anspruch 7, **dadurch gekennzeichnet, dass** das zusätzliche Material eine Magnetfarbe umfasst.

9. Verfahren nach einem der vorhergehenden Ansprüche, **dadurch gekennzeichnet, dass** die Einlage (1) ein Kunststoffmaterial umfasst, insbesondere ein Thermoplastmaterial.

10. Verfahren nach Anspruch 9, **dadurch gekennzeichnet, dass** das Kunststoffmaterial Polycarbonat, Polyethylenterephthalat, Polyurethan, Polyvinylchlorid oder Acrylnitril-Butadien-Styrol ist.

11. Verfahren nach einem der Ansprüche 1 bis 10, **dadurch gekennzeichnet, dass** das Funktionselement (2) ein Chip oder ein Chipmodul ist.

## Revendications

1. Procédé de fabrication d'un laminé fonctionnel, le procédé comprenant les étapes suivantes :
- fournir un inlay (1) formé d'au moins deux couches qui ont été laminées ensemble avec un élément fonctionnel (2), de telle sorte que l'élément fonctionnel (2) soit au moins en partie noyé dans l'inlay (1) ;
- former au moins un retrait (5) dans l'inlay (1) dans une zone adjacente à l'élément fonctionnel (2) ;
- laminer l'inlay (1) avec au moins une couche supplémentaire de telle sorte que la largeur de l'au moins un retrait (5) soit considérablement réduite ou que l'au moins un retrait (5) soit substantiellement fermé au moins par du matériau environnant après le laminage en raison du retrait de l'inlay (1).

2. Procédé selon la revendication précédente, **caractérisé en ce que** ledit au moins un retrait (5) présente une petite largeur par rapport aux dimensions de l'élément fonctionnel (2).

3. Procédé selon l'une quelconque des revendications précédentes, **caractérisé en ce que** ledit au moins un retrait (5) est une tranchée ou un trou, en particulier un trou borgne.

4. Procédé selon l'une quelconque des revendications précédentes, **caractérisé en ce que** les dimensions, le nombre et la configuration dudit retrait (5) sont corrélés à l'ampleur du retrait du laminé fonctionnel dans l'étape de laminage.

5. Procédé selon l'une quelconque des revendications précédentes, **caractérisé en ce que** ledit au moins un retrait (5) est formé par un laser ou par un jet d'eau.

6. Procédé selon l'une quelconque des revendications précédentes, **caractérisé en ce que** les retraits (5) sont disposés suivant un motif formant au moins un filigrane.

7. Procédé selon l'une quelconque des revendications précédentes, **caractérisé en ce que** le retrait (5) est au moins en partie rempli d'un matériau supplémentaire différent du matériau entourant le retrait (5) avant l'étape de laminage.

8. Procédé selon la revendication 7, **caractérisé en ce que** le matériau supplémentaire comprend une encre magnétique.

9. Procédé selon l'une quelconque des revendications précédentes, **caractérisé en ce que** l'inlay (1) comprend un matériau en plastique, en particulier un matériau thermoplastique.

10. Procédé selon la revendication 9, **caractérisé en ce que** le matériau en plastique est l'un parmi du polycarbonate, du polyéthylène téréphtalate, du polyuréthane, du polychlorure de vinyle et de l'acrylonitrile butadiène styrène.

11. Procédé selon l'une quelconque des revendications 1 à 10, **caractérisé en ce que** l'élément fonctionnel (2) est une puce ou un module de puce.
